# EUROPÄISCHE PATENTANMELDUNG

(11) **EP 1 227 449 A1**
(43) Veröffentlichungstag der Anmeldung: **31.07.2002**
(21) Anmeldenummer: 01102066.6
(22) Anmeldetag: 30.01.2001
(51) Int. Cl.: G07F 19/00, H04M 15/00, G06F 17/60

(54) **Abrechnungsverfahren für multimediale Netze**

(71) Anmelder: SIEMENS AKTIENGESELLSCHAFT, 80333 München (DE)
(72) Erfinder: Nauer, Bernhard, 81373 München (DE); Pfoertner, Thomas, 85635 Hoehenkirchen (DE)

(57) **Zusammenfassung**

Die Erfindung betrifft ein Verfahren zur Abrechnung der Nutzung eines, insbesondere multimedialen, Nachrichtennetzes nach den damit verbundenen Kostenfaktoren für eine zwischen einer Mehrzahl von Betreibern (11, 12) und einem Teilnehmer, mit jeweils einer Zugangseinrichtung für den Zugang zum Netz, durchgeführte Transaktion. Nach der Transaktion führt ein an der Transaktion beteiligter Betreiber/Teilnehmer (11, 12) und/oder ein weiterer Betreiber/Teilnehmer mit der jeweiligen Zugangseinrichtung eine Abrechnung mit mehreren Betreibern/Teilnehmern (11, 12) mittels eines im Nachrichtennetz erstellten, übertragenen und verarbeiteten Abrechnungsdatensatzes in Echtzeit durch.

## Beschreibung

Die Erfindung betrifft ein Verfahren zur Abrechnung der Nutzung eines, insbesondere multimedialen, Nachrichtennetzes nach den damit verbundenen Kostenfaktoren für eine zwischen einer Mehrzahl von Betreibern und mindestens einem Teilnehmer durchgeführte Transaktion.

Multimediale Netze ergeben sich aus einer netzartübergreifenden Verwendung einheitlicher Endgeräte und offener Übertragungsnetze und dem Bereitstellen von beliebigen Netzzugängen und einheitlichen Diensten. So ist die Zusammenfassung von heutigen Telekommunikations-, Fernseh-, Rundfunk- und Computernetzen zu einem einzigen multimedialen Netz denkbar.

Ein erster Ansatz zu einem multimedialen Netz ergibt sich durch die Verbindung von Mobilfunknetzen und dem Internet. Dadurch wird die Nutzung von Internetdiensten, Internetanwendungen und Inhalten im Mobilfunknetz ermöglicht. Um eine effiziente Nutzung zu garantieren, werden Mobilfunknetze der zweiten Generation zunehmend mit neuen Technologien, wie z. B. WAP (Wide Area Paging), GPRS (General Pocket Radio Service) und EDGE (Enhanced Data rates for Global Evolution), nachgerüstet. Mobilfunknetze der dritten Generation (IMT-2000 Technologie) beinhalten bereits die Möglichkeit einer effizienten Nutzung von Internetdiensten, Internetanwendungen und Inhalten.

Internetzugänge und Nutzungsmöglichkeiten von Internetdiensten, Internetanwendungen und Inhalten sind jedoch heute bereits nicht nur in Mobilfunknetzen, sondern auch in Telefon-Festnetzen möglich. Diese Dienste und Anwendungen sowie deren Inhalte können beispielsweise von Netzbetreibern des Telefonnetzes wie auch von anderen Betreibern, wie z. B. Internetserviceprovidern und Mobile Internetserviceprovidern, angeboten werden.

Bisher erfolgt in der Regel die Abrechnung der Nutzung von Diensten, Anwendungen und Inhalten, die in Telekommunikationsnetzen angeboten werden, sowie der Telefongespräche und des Internetzugangs über das Telekommunikationsnetz mittels einer Abbildung dieser in Anspruch genommenen Serviceleistungen auf Verbindungszeiteinheiten. Beispiel hierfür ist der Premiumrateservice. Eine derartige Umsetzung der Abrechnung der in Anspruch genommenen Serviceleistungen auf Verbindungszeiteinheiten hat den Vorteil, daß unmittelbar nach der in Anspruch genommenen Leistung, also online, wie beim Hot Billing oder Prepaid für Telefongespräche abgerechnet werden kann.

Dagegen muß für jede Serviceleistung, die innerhalb oder außerhalb eines Telefonnetzes zur Verfügung gestellt wird und die nicht auf Verbindungszeiteinheiten abgebildet wird oder werden kann, eine separate Rechnung erstellt werden, die anschließend an einen Teilnehmer der entstandenen Verbindung bzw. den Betreiber des angebotenen Dienstes oder der Anwendung gesendet werden muß, je nachdem, wer für die Nutzung des Dienstes bzw. der Anwendung die Kosten übernehmen wird. Beispiele hierfür sind gebührenpflichtige Internetdienste, Internetanwendungen und Inhalte. Insbesondere werden derartige Dienste nicht unmittelbar nach der in Anspruch genommenen Leistung, also online, und auch nicht mit einem in einem Telefonnetz verfügbaren Hot Billing- oder Prepaidabrechnungssystem sofort abgerechnet.

Nimmt nun ein Teilnehmer eines Netzes eine Transaktion in Anspruch, dann erhält der Teilnehmer für eine einzige Transaktion mehrere separate Rechnungen und/oder Abrechnungen online oder offline, die nur mühsam der ursprünglichen Transaktion zuzuordnen sind. (Unter einer Transaktion verstehen wir hierbei eine Folge von Schritten, die aus Sicht des Teilnehmers eine logische Einheit bilden, wie z. B. Nutzung eines Dienstes, Nutzung des zugehörigen Inhalts, die nicht auf Verbindungszeiten abgebildet werden, und die Übertragung der zugehörigen Informationen, die zeitabhängig abgerechnet werden.) So erfolgt z. B. die Belastung von Prepaidkarten für die Nutzung von Diensten, Anwendungen und Inhalten, die nicht auf Verbindungszeiten abgebildet werden, erst einige Zeit nach der Nutzung dieser Dienste, Anwendungen und Inhalte. Dadurch kann der Saldo von Prepaidkarten auch negativ werden.

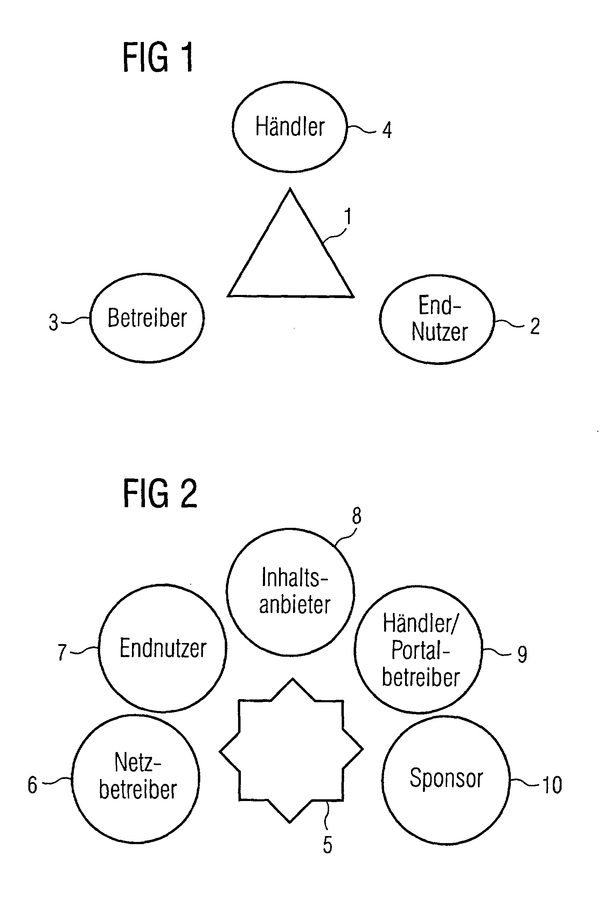

Die heute in Telefonnetzen üblichen Abrechnungsverfahren berücksichtigen pro Verbindung maximal drei Beteiligte, die, wie es beispielsweise aus Fig. 1 ersichtlich ist, ein Betreiber 3, ein Endnutzer 2 und ein Händler 4 sein können. Der Betreiber erhält für das in Anspruch genommene Telefonnetz 1 zur Übertragung von Daten eine entsprechende Vergütung in Form von Gebühren. Der Endnutzer zahlt diese Gebühren an den Betreiber. Ein dritter Beteiligter, nämlich der Händler, kann als Diensteanbieter entweder die Gebühren des Endnutzers an den Betreiber übernehmen (Reverse Charging, z. B. Telefonanfangsnummern 0800), die Gebühren mit dem Endnutzer nach einem festen Schema aufteilen (z. B. Telefonanfangsnummern 0180) oder seinen Dienst über den Telefonnetzbetreiber vergebühren lassen (z. B. Telefonanfangsnummern 0900).

Hierbei ist eine direkte vorab durchgeführte Preisauskunft nicht möglich, vielmehr wird der Preis für den in Anspruch genommenen Dienst durch die vierte Ziffer der angerufenen Telefonanfangsnummer bestimmt. Eine Abrechnung von innerhalb einer Verbindung in Anspruch genommenen Diensten mehrerer Betreiber bzw. Händler gegenüber einem oder mehreren Endnutzern ist in den bisher bekannten, in Telefonnetzen praktizierten Abrechnungsverfahren nicht möglich. Ebenso können bei den Abrechnungsverfahren auch keine Beteiligten berücksichtigt werden, die nicht unmittelbar an der Verbindung beteiligt sind.

In multimedialen Netzen können jedoch wesentlich mehr Beteiligte an einer Abrechnung eines Transaktionsschrittes beteiligt sein. So ist es beispielsweise denkbar, daß ein Transaktionsschritt aus der Nutzung eines Dienstes mit Inhalt besteht und daß dabei neben dem Nutzer noch ein Betreiber des Portals, ein Betreiber des Dienstes, ein Betreiber für den Inhalt, ein Betreiber für das Zugangsnetz und ein Betreiber für das Transportnetz, also insgesamt sechs Beteiligte, vorhanden sind, zwischen denen abgerechnet werden muß. Dies kann sich bei jedem Transaktionsschritt ändern. Deshalb ist eine Zuordnung der einzelnen Abrechnungsposten einer später zugestellten Abrechnung zu dem jeweiligen Transaktionsschritt nur schwierig zu verwirklichen.

Demzufolge liegt der vorliegenden Erfindung die Aufgabe zugrunde, ein Verfahren zur Abrechnung der Nutzung eines multimedialen Nachrichtennetzes zur Verfügung zu stellen, das eine schnelle Abrechnung zwischen und mit einer beliebigen Anzahl von Betreibern/Teilnehmer und eine Zuordnung der Abrechnungsposten zu einem ausgewählten Transaktionsschritt ermöglicht.

Diese Aufgabe wird gemäß den Merkmalen des Anspruchs 1 gelöst.

Das Verfahren zur Abrechnung der Nutzung eines, insbesondere multimedialen, Nachrichtennetzes nach den damit vorhandenen Kostenfaktoren für eine zwischen einer Mehrzahl von Betreibern und mindestens einem Teilnehmer durchgeführte Transaktion berücksichtigt die Kostenfaktoren, die in einem solchen Netz durch Nutzung von Portalen, Anwendungen, Diensten, Inhalten, Basisdiensten, Zugangsnetzen, Transportnetzen, Netzinhalten etc. verursacht werden, welche als Netzsegmente bezeichnet werden können.

Diese Dienste, Anwendungen, Inhalte usw. werden von diversen Anbietern die - die neben den Betreibern eines Netzes im engeren Sinne - auch als "Betreiber" bezeichnet werden können, zur Verfügung gestellt.

Das Verfahren zur Abrechnung der Nutzung von multimedialen Netzen ermöglicht die Abrechnung der Nutzung sowohl für den Teilnehmer als auch den Betreiber eines Netzes sowie andere an der Kommunikation beteiligten Betreiber. Hierbei bilden mindestens drei Betreiber/Teilnehmer die Beteiligten an einer gemeinsamen Kommunikationsbeziehung, die über das multimediale Netz entsteht.

Es wird für jeden an der Nutzung des Netzes Beteiligten eine Abrechnung durchgeführt. Zusätzlich können weitere Beteiligte, die nicht als Beteiligte an der Nutzung sondern an der Abrechnung auftreten, in der Abrechnung mit berücksichtigt werden. Hierbei kann ein solcher weiterer Beteiligter alle Kosten oder anteilige Kosten für die entstandene Kommunikationsbeziehung übernehmen.

Für jeden Beteiligten wird jeweils ein spezifisches Abrechnungsmodell in Echtzeit erstellt. Hiermit werden für jede einzelne Beziehung mit jeweils einem der weiteren Beteiligten eine Zahlungsrichtung mit den für die Nutzung relevanten Abrechnungsparameter festgelegt, die Abrechnungsmodelle gegenseitig abgeglichen und anschließend ein Abrechnungsdatensatz für jeden Beteiligten aufgrund seines Abrechnungsmodells erstellt, der die Werte der Abrechnungsparameter beinhaltet. Die an die weiteren Beteiligten zu zahlenden Beträge und/oder die von den weiteren Beteiligten zu bezahlenden Beträge werden mittels des Abrechnungsdatensatzes ermittelt.

Durch die Erstellung eines Abrechnungsmodells für jeden Teilnehmer, Dienstanbieter und Betreiber des Netzes wird eine Darstellung aller maßgeblichen Zahlungsströme von und zu dem Teilnehmer bzw. dem Betreiber erreicht. Hierbei ist ein zu einem Teilnehmer bzw. Betreiber hinführender Zahlungsstrom beispielsweise mit einer Gutschrift auf sein Kontos gleichzusetzen und ein Zahlungsstrom, der von dem Teilnehmer bzw. dem Betreiber weggeht, mit einer Belastung seines Kontos zu vergleichen.

Auf der Basis eines solchen Abrechnungsmodells wird dann mindestens ein Abrechnungsdatensatz für jede Verbindung mit und zwischen den anderen Betreibern und/oder Teilnehmern mit den für die Nutzung relevanten Abrechnungsparametern und deren Werten erstellt. Die Abrechnungsparameter sind Parameter, die bei einer Abrechnung der Nutzung die Art und die Form der anfallenden Vergebührung beschreiben. Hierbei wird unterschieden zwischen nutzungsabhängigen und nutzungsunabhängigen Abrechnungsparametern. Den nutzungsunabhängigen Parametern sind diejenigen Gebühren zuzuordnen, die unabhängig von einer Nutzung eines bestimmten Dienstes oder einer Anwendung anfallen. Dies ist beispielsweise bei einem Betreiber der Fall, der die Gebühren nicht nach der Zeit für die Benutzung eines Dienstes, der Menge der übertragenen Daten oder der Distanz der Verbindung berechnet, sondern einen monatlichen Pauschalpreis zugrundelegt, in dem eine bestimmte Menge von Dienstleistungen enthalten sind. Ein solches nutzungsunabhängiges Charging wird auch als "Flat Rate" bezeichnet. Bei den nutzungsabhängigen Abrechnungsparametern wird beispielsweise pro Transaktion, pro Zeiteinheit, pro übertragene Seite oder ortsabhängig eine Gebühr veranschlagt.

Mit Hilfe des erstellten Abrechnungsmodells und der dazugehörigen Abrechnungsdatensätze für jede Verbindung mit und zwischen den Betreibern und/oder Teilnehmern des Netzes wird somit eine Abrechnung in Echtzeit von Gebühren ermöglicht, die sowohl durch nutzungsabhängige als auch durch nutzungsunabhängige Abrechnungsparameter in die Abrechnung mit eingehen.

Weil der Abrechnungsdatensatz für jede Verbindung nur diejenigen Abrechnungsparameter beinhaltet, die unter Berücksichtigung der Kostenübernahme durch die anderen Betreiber und/oder Teilnehmer anfallen, ist eine genaue Auflistung aller Kosten bzw. Gutschriften für den Teilnehmer und aller Kosten bzw. Gutschriften für die Betreiber und deren Abrechnung möglich. Es können dabei die Belastungen und Gutschriften nicht nur zwischen einem Teilnehmer, der beispielsweise einen Dienst nutzt, und dem Betreiber berücksichtigt werden, sondern vielmehr auch die Belastung und die Gutschriften, die aufgrund vorangegangener Verträge zwischen den Betreibern vereinbart worden sind.

Mit Hilfe des Abrechnungsmodells und der Abrechnungsdatensätze ist auch eine Verrechnung der angefallenen Gebühren verschiedener Dienste eines Anbieters denkbar (konvergentes Billing). So kann ein Teilnehmer des multimedialen Netzes von einem Dienstebetreiber sowohl den Mobilfunkdienst als auch einen Internet-Zugangsdienst nutzen. Im Rahmen des konvergenten Billing kann der Teilnehmer dann ein Kontingent kostenloser Online-Nutzungsstunden erhalten, wenn seine Mobilfunkrechnung eine bestimmte Grenze pro Monat überschreitet.

In einer bevorzugten Ausführungsform werden mit Hilfe einer Abrechnungsdatensatzart diejenigen Abrechnungsdaten bestimmt, die für eine Abrechnung eines Teilnehmers oder eines Betreibers gesammelt werden müssen. Zu den Abrechnungsdaten zählen nicht nur die bereits erwähnten Abrechnungsparameter und deren Werte, sondern auch die Anzahl der Verbindungen mit den anderen Betreibern und/oder Teilnehmern, Parameter zur Art der Nutzung und die vorbestimmten Tarife für die einzelnen Abrechnungsparameter. Letztere werden zumeist durch vorausgegangene Verträge zwischen den Teilnehmern und/oder Betreibern festgelegt. Die für einen Teilnehmer ausgewählten Abrechnungsparameter können, falls gewünscht, abhängig von den Parametern zur Art der Nutzung für den gleichen Teilnehmer differieren. Mögliche Parameter zur Art der Nutzung sind hierbei Parameter für eine Gesprächsverbindung oder für eine Paketübertragung. Zur vereinfachten Handhabung dieser Parameter zur Art der Nutzung bei der Abrechnung werden diese in sogenannte Nutzungsklassen aufgeteilt.

Ein bestimmter Abrechnungsdatensatz wird jeweils für einen bestimmten Zeitpunkt t bestimmt. Sobald sich ein Abrechnungsdatensatz für hintereinanderliegende Zeitpunkte t aufgrund einer Änderung in der Anzahl der beteiligten Betreiber und/oder Teilnehmer, der Nutzungsklasse, der Abrechnungsparameter und/oder der Tarife ändert, werden alle Abrechnungsdaten bezogen auf das vorangegangene Zeitintervall zusammengefaßt und ein Abrechnungsdatensatz für jeden Teilnehmer und/oder Betreiber erstellt.

Eine Abrechnungsdatensatzart kann auch durch Beenden der Nutzung oder einer der Verbindungen oder durch eine vorgegebene Regel für einen bestimmten Abrechnungsparameter, wie beispielsweise, daß das Zeitintervall nur maximal 10 Minuten betragen darf oder die Abrechnungssatzart nur bis Transaktions-ende gültig ist etc., für ungültig erklärt werden.

Die oben genannten Regeln können sowohl einzeln als auch in Kombination definiert werden. Hierbei können die Kriterien für das Ende der Gültigkeit einer Abrechnungsdatensatzart administriert werden. Wird in einer Regel eine Zeitangabe verwendet, dann bezieht sich diese auf eine in den beteiligten Betreibersystemen synchronisierte Uhrzeit.

Sobald eine Abrechnungsdatensatzart für ungültig erklärt wird, wird ein Abrechnungsdatensatz für die Verbindung mit einem bestimmten Betreiber und/oder Teilnehmer erstellt. Sofern der Teilnehmer weiterhin den Dienst nutzt, wird dann eine neue Abrechnungsdatensatzart bestimmt. Somit sind in der neuen Abrechnungsdatensatzart neue geänderte Abrechnungsdaten auswählbar und die geänderten Verhältnisse innerhalb der Kommunikationsbeziehung zu berücksichtigen. Es können demzufolge insbesondere für die Abrechnung anhand nutzungsabhängiger Abrechnungsparameter eine oder mehrere Abrechnungsdatensatzarten für einen oder mehreren Abrechnungsdatensätze existieren.

Die Abrechnungsdatensatzarten, die eineindeutig jedem abzurechnendem Teilnehmer und/oder Betreiber für jede Verbindung und für alle Zeitpunkte t des Intervalls, in dem die Verbindungen bestehen, zugeordnet sind, bestehen vorzugsweise aus einer Abrechnungsstruktur und einer zugehörigen Abrechnungssemantik, die aus dem Abrechnungsmodell für alle an den Verbindungen zum Zeitpunkt t beteiligten Betreiber und/oder Teilnehmer abgeleitet wird.

Die Eineindeutigkeit der Abrechnungsdatensatzarten kann von zusätzlichen Parametern abhängen, wie beispielsweise dem Ort, an dem sich der abzurechnende Teilnehmer und/oder Betreiber zum Zeitpunkt t befindet. Die Erstellung einer Abrechnungsdatensatzart kann somit unter Einbeziehung einer Vielzahl von Abrechnungsdaten gegenüber Abrechnungen in heutigen Telefonnetzen erfolgen. Die Abrechnungsstruktur als auch die Abrechnungssemantik einer Abrechnung sind dabei sowohl für Belastungen als auch für Gutschriften des Kontos eines Teilnehmers und/oder Betreibers gleich.

Aufgrund der Erstellung eines Abrechnungsmodells mit den dazugehörigen Abrechnungsdatensätzen für jeden Teilnehmer und/oder Betreiber in Echtzeit unter Berücksichtigung der Kostenübernahme durch andere Betreiber wird eine sofortige Belastung von Prepaid-Karten ermöglicht, und nachfolgende Rechnungserstellungen erübrigen sich. Jedoch kann das erfindungsgemäße Verfahren für jede Art von Abrechnung, wie Prepaid, Postpaid per Bank, per Kredit etc., vorteilhaft genutzt werden. Auch kann der Zeitpunkt der Abrechnung, zu dem die Abrechnung dem Teilnehmer und/oder Betreiber zugesandt wird, individuell bestimmt werden. So kann die Zusendung beispielsweise unmittelbar nach der stattgefundenen Nutzung des Dienstes oder zu jedem 30. Tag eines Monats erfolgen.

Die vorbestimmten Tarife für die Abrechnungsparameter müssen zu dem Zeitpunkt t für den abzurechnenden Teilnehmer und/oder Betreiber in Abhängigkeit von den geltenden Tarifen zwischen und mit den anderen Betreibern und/oder Teilnehmern eineindeutig sein. Jedoch können die Tarife zwischen den Zeitpunkten t für jeden Abrechnungsparameter abgeändert werden, so daß für jeden Abrechnungsparameter ein Tarif oder mehrere Tarife gelten können.

Für jeden Tarif eines Abrechnungsparameters kann bestimmt werden, ob er direkt in die Abrechnung der stattgefundenen Nutzung mit den damit verbundenen entstandenen Verbindungen zu anderen Betreibern und/oder Teilnehmern mit einfließt oder ob er in einer gesonderten Abrechnung, nämlich einer indirekten Abrechnung, berücksichtigt wird. So kann z. B. die Werbung eines Sponsors, der sowohl als Betreiber als auch als unabhängiger Dritter im Netz auftreten kann und dem eine eigene Abrechnungsstruktur zugeordnet wird, direkt in die Abrechnung der Nutzung des Dienstes mit einfließen, wogegen Bonusprogramme, wie beispielsweise Web Miles, zu gesonderten Rechnungen führen können, die zu einem späteren Zeitpunkt in die Abrechnung eines Dienstes einfließen können.

Das zu Anfang der entstandenen Verbindungen erstellte Abrechnungsmodell, welches für jeden Teilnehmer und/oder Betreiber mit Hilfe der relevanten Abrechnungsdaten gebildet wird, ist bis zur Beendigung der Verbindungen bei unveränderten Abrechnungsdaten statisch. Es können jedoch mehrere Versionen eines Abrechnungsmodells existieren. So muß jeder Abrechnung eineindeutig eine Version des Abrechnungsmodells zugeordnet werden, wobei jede Version für alle möglichen beteiligten Betreiber und/oder Teilnehmer, die in Verbindung mit einem bestimmten Teilnehmer und/oder Betreiber stehen oder untereinander Verbindungen aufweisen, Abrechnungsstrukturen, Tarif-strukturen und Beziehungen zwischen diesen Strukturen berücksichtigt.

Somit spiegelt das Abrechnungsmodell die Verträge und Agreements zwischen den Betreibern und/oder den Teilnehmern zum Zeitpunkt der Abrechnung wieder. Es ist beispielsweise eine neue Version eines Abrechnungsmodells zu erstellen, wenn eine Beziehung zwischen dem Teilnehmer und einem weiteren Betreiber hinzugefügt wird. Diese Version eines Abrechnungsmodells kann ebenso wie die vorangegangenen Versionen zentral oder verteilt innerhalb des multimedialen Netzes gespeichert werden. Durch das ständig erneute Anpassen des Abrechnungsmodells an die neuen Verhältnisse innerhalb des multimedialen Netzes wird somit eine aktuelle und zuverlässige Abrechnung garantiert.

Bei einer Abrechnung anhand nutzungsunabhängiger Abrechnungsparameter gibt es für jeden abzurechnenden Teilnehmer und/oder Betreiber genau eine Abrechnungsdatensatzart für einen Abrechnungsdatensatz. Diese Abrechnungsdatensatzart ist dem Zeitintervall zugeordnet, für das die Abrechnung erfolgen soll, wobei bei einmaligen Zahlungen, wie beispielsweise einer Grundgebühr an den Netzbetreiber, es genau ein Zeitintervall mit gleichem Anfangs- und Endzeitpunkt gibt. Wird der Endzeitpunkt des Zeitintervalls erreicht, so wird die Abrechnungsdatensatzart ungültig und ein Abrechnungsdatensatz erstellt. Bei regelmäßigen Zahlungen, wie beispielsweise beim Flat Rate, wird ein neue Abrechnungsdatensatzart, eventuell mit gleichem Inhalt, erzeugt.

Es ist zu beachten, daß von Prepaid-Karten erst dann abgebucht werden kann, wenn ein Zugriff auf die Prepaid-Karte möglich ist, wie beispielsweise beim Aufbauen einer erneuten Kommunikationsbeziehung.

Um teilnehmer- bzw. betreiberspezifische Abrechnungsmodelle und Abrechnungsdatensätze erstellen zu können, beinhalten die Abrechnungsdatensatzarten strukturell mindestens eine Identifikationszeichenfolge, wie eine Nutzer-Identifikation (z. B. in Form einer weltweit eindeutigen Telefonnummer oder IP-Adresse) zur weltweit eindeutigen Identifizierung der Beteiligten.

Eine mögliche Realisierung einer Abrechnungsdatensatzart findet mittels eines Vektors statt, in dem anstelle von teilnehmer- bzw. betreiberspezifischen Parametern Pointer auf Unterdatensatzarten für die teilnehmer- und betreiberspezifischen Abrechnungen hinterlegt sind. Auf diese Weise lassen sich als Unterdatensatzarten bereits standardisierte Abrechnungsdatensatzarten, wie beispielsweise Call Detail Record (CDR) verwenden. Jede Unterdatensatzart ist solange gültig, bis sich innerhalb der Unterdatensatzart entweder eine Nutzungsklasse oder ein Abrechnungsparameter oder ein Tarif ändert oder die Verbindungen beendet werden oder eine für die Abrechnungsparameter vorgegebene Regel optional zutrifft. Wird in einer Regel eine Zeitangabe verwendet, dann bezieht sich diese auf eine in den beteiligten Betreibersystemen synchronisierte Uhrzeit. Die Abrechnungsdatensatzart wird ungültig, sobald eine Unterdatensatzart ungültig wird. Auch die für das Ende der Gültigkeit einer Unterdatensatzart entscheidenen Kriterien können administriert werden.

Fest definierte (statische) Abrechnungsdatensatzarten sollen für alle oder einzelne Teilnehmer/Betreiber vorgegeben werden können.

In einer bevorzugten Ausführungsform wird für jede Verbindung zu einem anderen Betreiber und/oder Teilnehmer ein Nutzungsdatensatz mit Nutzungsdaten erstellt, wobei sich die Nutzungsdaten aus Maßzahlen für die jeweiligen Abrechnungsparameter zusammensetzen. Eine Nutzungsdatensatzart bestimmt, welche Nutzungsdaten anhand der Abrechnungsdatensatzarten aller Kommunikationsbeziehungen mit und zwischen anderen Betreibern und/oder Teilnehmern gesammelt werden. Die Maßzahl gibt ein Maß für die Größe des jeweiligen Abrechnungsparameters wieder. So ist beispielsweise für den Abrechnungsparameter "Verbindungsdauer in Sekunden" die Maßzahl 50 gleichzusetzen mit einer Verbindungsdauer von 50 Sekunden. Für den Abrechnungsparameter "Datenübertragungsrate kbit" bedeutet die Maßzahl 2500 eine Übertragungsrate von 2500 kbit. Die Nutzungsdatensatzart, die für alle an den Kommunikationsbeziehungen beteiligten Teilnehmer und Betreiber alle aktuellen Abrechnungsparameter mit dazugehörigen Nutzungsdaten enthält, bestimmt die Auswahl der zu sammelnden Nutzungsdaten anhand der nutzungsabhängigen Abrechnungsdatensatzarten aller an den Kommunikationsbeziehungen beteiligter Teilnehmer und/oder Betreiber.

Auch die Nutzungsdatensatzart kann mittels eines Vektors realisiert werden, der zu jedem Beteiligten mindestens einen Pointer auf die Abrechnungsdatensatzarten für die Beteiligten enthält. Rechnet z. B. ein Portalbetreiber mit einem Teilnehmer, der einen Dienst nutzt, diesen Dienst per Klick ab, mit dem Diensteprovider dagegen per Nutzung, so enthält die Nutzungsdatensatzart für den Portalbetreiber zwei Abrechnungsparameter: per Klick (Dienst) und per Dienstnutzung.

Vorteilhaft kann, um Redundanzen in der Datensammlung zu vermeiden, wie es beispielsweise der Fall ist, wenn ein Dienst mehrfach per Nutzung abgerechnet wird, als eine weitere Realisierungsmöglichkeit die Nutzungsdatensatzart alle Abrechnungsdatensatzarten aller Beteiligten zu einer neuen Nutzungsdatensatzart zusammengefaßt werden. Bei dieser Zusammenfassung werden doppelte Felder eliminiert. Die Realisierung geschieht analog zur Realisierung der Abrechnungsdatensatzarten.

Die Nutzungsdatensatzarten sind solange gültig, wie die zugehörigen Abrechnungsdatensatzarten gültig sind. Sobald eine Nutzungsdatensatzart ungültig wird, wird der zugehörige Nutzungsdatensatz erstellt und abgeschlossen.

Feste (statische) Nutzungsdatensatzarten für das Sammeln von Nutzungsdaten können für einen oder alle Beteiligten vorgegeben werden. Die Beteiligten können in den Nutzungsdatensatzarten durch Variable ersetzt werden.

Weitere Ausführungsformen und Vorteile ergeben sich aus den Unteransprüchen.

Nachfolgend wird die Erfindung anhand von Ausführungsbeispielen beschrieben, die anhand der Abbildungen näher erläutert werden. Hierbei zeigen:
Fig. 1 eine schematische Darstellung eines Telefonnetzes mit drei Beteiligten gemäß dem Stand der Technik,
Fig. 2 eine schematische Darstellung eines multimedialen Netzes mit einer Vielzahl von Beteiligten gemäß der vorliegenden Erfindung,
Fig. 3 eine Darstellung eines Abrechnungsmodells gemäß einer ersten Ausführungsform,
Fig. 4 eine Darstellung eines Abrechnungsmodells gemäß einer zweiten Ausführungsform, und
Fig. 5 eine Darstellung eines weiteren Abrechnungsmodells gemäß der zweiten Ausführungsform.

Fig. 1 zeigt eine schematische Darstellung eines Telefonnetzes 1 mit drei Beteiligten, nämlich einem Endnutzer 2, einem Betreiber 3 und einem Händler 4. Demgegenüber zeigt Fig. 2 ein multimediales Netz, in dem mehr als drei Beteiligte an einer Abrechnung beteiligt sind. An einem multimedialen Netz 5 sind beispielsweise ein Netzbetreiber 6, ein Endnutzer 7, ein Inhaltsanbieter 8, ein Händler-/Portalbetreiber 9 und ein Sponsor 10 an einer Kommunikationsbeziehung beteiligt. Somit sind in dem multimedialen Netz mehrere Betreiber aktiv.

Es ist denkbar, daß dem Endnutzer 7 bei der Nutzung eines Dienstes der Inhalt von dem Inhaltsanbieter 8 angeboten wird, das Portal von dem Portalbetreiber 9 angeboten wird und die Datenübertragung mittels dem Netzbetreiber 6 durchgeführt wird. Die enstandenen Kosten für die einzelnen Serviceleistungen werden dem Endnutzer 7 oder anderen Betreibern und/oder Teilnehmern, die auch Sponsoren sein können, in Rechnung gestellt. Hierbei ist zu beachten, daß jeder Betreiber eine eigene Abrechnungsstruktur verfolgt, die sich mit einer Belastung bzw. einer Gutschrift des Kontos des jeweiligen Betreibers und/oder des Teilnehmers bei der Abrechnung der Nutzung niederschlägt.

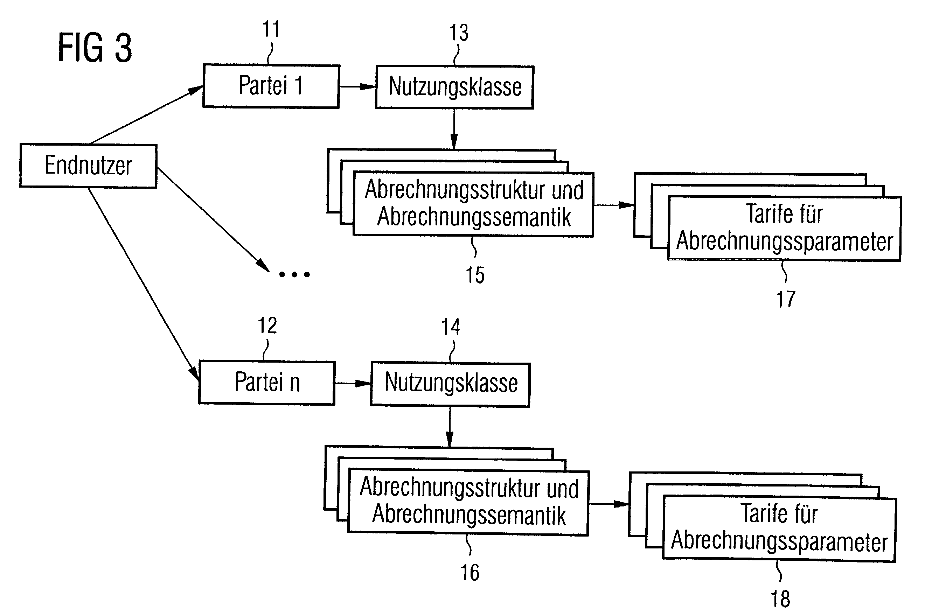

In Fig. 3 ist ein Abrechnungsmodell für einen Endnutzer (Teilnehmer) gezeigt, der in Verbindung mit den Parteien (Beteiligten) 1 - n steht.

Das Abrechnungsmodell ist dem abzurechnenden Endnutzer zugeordnet. Der Endnutzer steht mit den Parteien 1 - n die beispielsweise Betreiber von Diensten und Netzen innerhalb des multimedialen Netzes darstellen, in Verbindung. Die dem Abrechnungsmodell zugeordnete Abrechnungsdatensatzart beinhaltet dabei strukturell eine Nutzer-Identifikation für eine eindeutige Identifikation der beteiligten Parteien 11, 12. Parteispezifisch beinhaltet die Abrechnungsdatensatzart verschiedene Nutzungsklassen 13, 14, in welche die jeweilige Art der Nutzung anhand der Parameter für die Art der Nutzung klassifiziert werden kann. So ist beispielsweise bei einem Betreiber des Netzes eine Unterteilung der Nutzung des Netzes in die Nutzungsklassen Gesprächsverbindung und Paketübertragung denkbar.

Nutzungsklassenspezifisch findet eine Aufteilung in verschiedene Abrechnungsstrukturen mit dazugehörigen Abrechnungssemantiken 15, 16 abhängig von der jeweils gültigen Abrechnungsstruktur im Bezug auf die zugeordnete Partei 11, 12 mit der ausgewählten Nutzungsklasse 13, 14 statt. Die in der Abrechnungsdatensatzart berücksichtigten Abrechnungsdaten betreffen u. a. die Abrechnungsparameter, deren Wert, deren Maßzahl sowie die vereinbarten Tarife 17, 18 für die Abrechnungsparameter.

Die Abrechnungsparameter werden in nutzungsabhängige und nutzungsunabhängige Abrechnungsparameter unterteilt, wie es beispielhaft in unterstehender Tabelle angeführt wird.

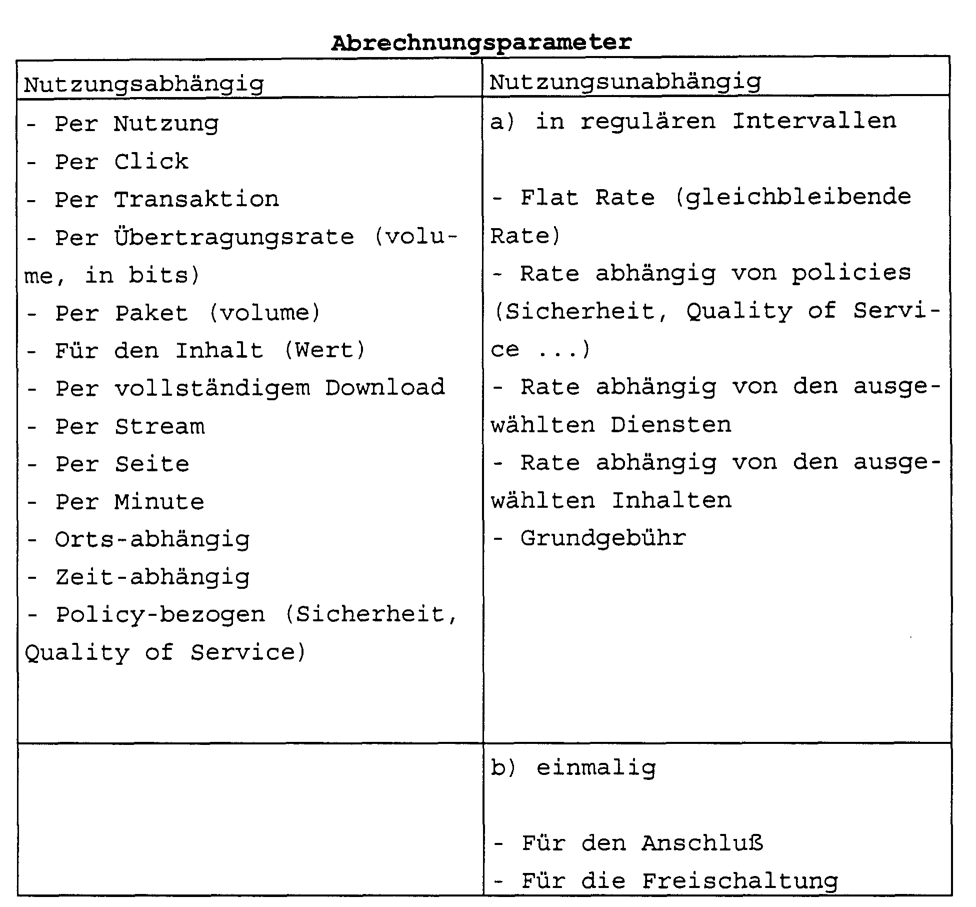

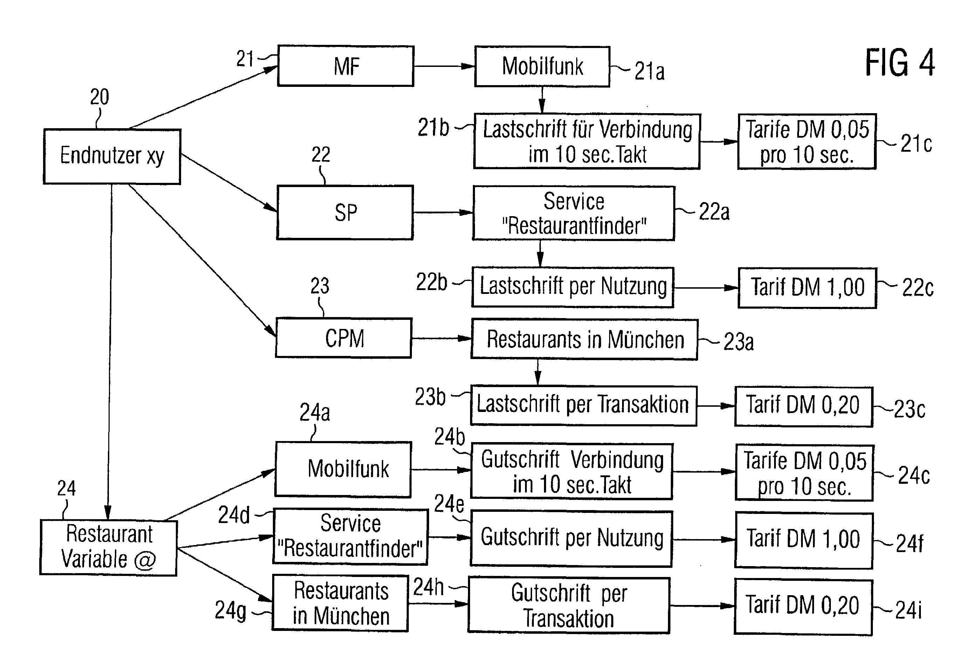

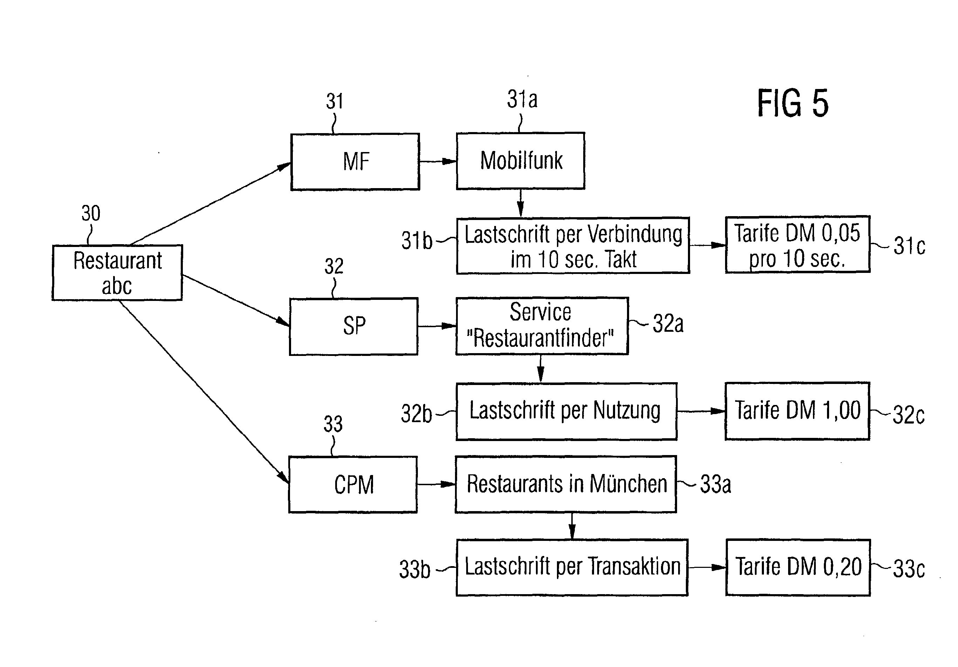

Die Figuren 4 und 5 zeigen Abrechnungsmodelle für einen Endnutzer (Teilnehmer) und ein Restaurant (Betreiber) gemäß einer zweiten Ausführungsform der Erfindung.

Vorab werden einige Grundvoraussetzungen für das erfindungsgemäße Abrechnungsverfahren einer beteiligten Partei angegeben:

Das Verfahren selbst basiert auf den bei Datenbanktransaktionen verwendeten Mechanismen, wie Beginn Transaktion, Rücksetzen Transaktion, vorläufiges Ende einer Transaktion und Ende Transaktion. Es verwendet Master- und Slave-Prozesse. Das Erstellen von Abrechnungsdatensatzarten, das Erstellen einer Nutzungsdatensatzart und das Sammeln von zugehörigen Nutzungsdaten, das Erstellen von parteispezifischen Abrechnungsdatensätzen etc. kann jeweils zu einer Datenbanktransaktion zusammengefaßt werden. Diese Datenbanktransaktionen können verteilt innerhalb des Netzes ablaufen.

Eine der Grundvoraussetzungen für das Abrechnungsverfahren einer beteiligten Partei ist, daß Zugriffe auf folgende Dateien hierbei möglich sind: die Nutzungsdatensatzart für die Verbindungen, die hierzu gesammelten Nutzungsdaten sowie die Abrechnungsdatensatzart für die abzurechnende Partei. Die Anpassung der gesammelten Nutzungsdaten auf die Abrechnungsdatensatzart der abzurechnenden Partei kann hierbei optional durch einen Preprozessor erfolgen.

Für die Erzeugung einer Abrechnungsdatensatzart können folgende Optionen zur Verfügung stehen:
- Zu Beginn einer Kommunikationsbeziehung zwischen den einzelnen Parteien bzw. dem Endnutzer können für Lösungen, die auf der Prepaid-Karte und dem Hotbilling-Prozeß basieren, Abrechnungsdatensatzarten erzeugt werden, und während der bestehenden Verbindungen können neue Abrechnungsdatensatzarten jeweils zum Zeitpunkt des Ungültigwerdens der aktuellen Abrechnungsdatensatzarten erzeugt werden, wobei die bestehende Verbindung und die Abrechnungsdatensatzart miteinander synchronisiert sind.
- Unabhängig vom Zeitpunkt der bestehenden Verbindungen können die Abrechnungsdatensatzarten erzeugt werden. Dies ist sowohl während als auch nach der Nutzung eines Dienstes möglich. Hierbei sind die bestehenden Verbindungen und die Abrechnungsdatensatzarten nicht miteinander synchronisiert.
- Abhängig von den vorgegebenen Regeln, die beispielsweise einem Abrechnungsparameter zugeordnet werden können, können Abrechnungsdatensatzarten synchron zu bestehenden Verbindungen als auch nicht-synchron zu bestehenden Verbindungen erzeugt werden.

Für die Erzeugung der Nutzungsdaten sind folgende Möglichkeiten denkbar:
- Wenn die bestehenden Verbindungen und die Abrechnungsdatensatzarten miteinander synchronisiert sind, so brauchen nur diejenigen Abrechnungsdaten gesammelt werden, die durch die Abrechnungsdatensatzarten aller beteiligten Parteien bestimmt sind. Diese Art der Erzeugung von Nutzungsdaten stellt für die Prepaid-Karte- und Hotbilling-Zahlungsart die beste Lösung dar.
- Wenn die bestehenden Verbindungen und die Abrechnungsdatensatzarten nicht synchronisiert sind, dann müssen alle denkbaren, von den beteiligten Parteien benötigten und sich aus den Abrechnungsmodellen der beteiligten Parteien ergebenen Nutzungsdaten gesammelt werden. In diesem Fall wird eine feste, also stabile Nutzungsdatensatzart benötigt.
- Unabhängig von einer spezifischen Nutzung und unabhängig von den beteiligten Parteien werden die Abrechnungsdaten bei einer statischen Sammlung von Nutzungsdaten gesammelt. In diesem Fall wird eine feste Nutzungsdatensatzart benötigt.
- Abhängig von vorgegebenen Regeln werden die Nutzungsdaten jeweils nach einem der vorgenannten Varianten gesammelt, wie es z. B. zur Integration von existierenden Abrechnungsverfahren notwendig ist. In diesem Fall wird eine feste Nutzungsdatensatzart für das Sammeln von Abrechnungsdaten benötigt.
- Alternativ kann eine Variable in den Nutzungsdatensatzarten zum Zeitpunkt der Nutzung durch das tatsächliche Datum ersetzt werden. Grundsätzlich kann eine Variable auch erst zum Zeitpunkt der Nutzung mit einer Regel verbunden werden, wie es beispielsweise der Fall ist, wenn ein konkretes Restaurant bei einer Restaurant-Suchtransaktion gefunden wurde und eine Verbindung mit dem Restaurant aufgebaut wird.

Grundsätzlich existieren keine direkten Abhängigkeiten zwischen den Abrechnungsverfahren verschiedener beteiligter Parteien.

Es können verschiedene Abrechnungsarten in einem Abrechnungsverfahren gemäß der vorliegenden Erfindung berücksichtigt werden. So kann z. B. in der Abrechnungsart "All inclusive" eine Zusammenfassung aller Leistungen in der bestehenden Verbindung von einem Betreiber (Provider) dem Endnutzer zu einem speziellen Tarif mit der Bezeichnung "All inclusive" angeboten werden. Es gibt somit im Abrechnungsmodell des Endnutzers nur eine abrechnende Partei, eine Nutzungsklasse, einen Abrechnungsparameter und einen oder mehrere zugehörige Tarife.

In der Abrechnungsart "All in one" werden alle an den bestehenden Verbindungen beteiligten Parteien mit ihren Nutzungsklassen, Abrechnungsparametern und Tarifen im Abrechnungsmodell des Endnutzers berücksichtigt.

Grundvoraussetzung für die Sicherheit des Abrechnungsverfahren gemäß der vorliegenden Erfindung ist eine sichere Schlüsselverteilung; optional ist die Zertifizierung der beteiligten Parteien. Details hängen vom gewählten Sicherheitslevel, den verwendeten Sicherheitsfunktionen, Sicherheitsmechanismen und Sicherheitsalgorithmen ab.

Der Ablauf des erfindungsgemäßen Verfahrens wird nun anhand des in den Figuren 4 und 5 gezeigten Ausführungsbeispiels näher beschrieben werden.

Ein Diensteanbieter 22 bietet einen "Restaurantfinder" 22a als Serviceleistung an. Der zugehörige Inhalt (Content) 23a wird von einem Inhaltsanbieter 23 für die Stadt München angeboten. Der Dienst ist von jedem beliebigen Endgerät, insbesondere mobilem Endgerät, von jedem Ort aus über jedes Zugangsnetz nutzbar. Ein Endnutzer 20 (Teilnehmer) nutzt den Dienst in München über den Betreiber des Mobilfunknetzes 21 mit der Dienstleistung "Mobilfunk" 21a. Das ausgewählte Restaurant 24 kommt für die gesamten mit der Nutzung verbundenen Kosten auf.

Das Verfahren besteht nun aus drei unabhängigen voneinander ablaufenden Prozessen: dem Modellierungsprozeß, den Nutzungsdatensammelprozeß (Charging) und dem parteispezifischen Abrechnungsprozeß (billing/payment).

Jeder dieser Prozesse wird von einem Masterprozeß gesteuert, der an einem eindeutig zugeordneten Server abläuft. Der Masterprozeß kann wahlweise sowohl kontinuierlich (im Hintergrund) ablaufen als auch spezifisch für ein bestimmtes Zeitintervall/Ereignis gestartet werden.

Der Server für den Masterprozeß der Modellierungsphase wird von der abrechnenden Instanz vorgegeben. Der Server für den Masterprozeß der Nutzungsdatensammelphase wird endnutzerspezifisch festgelegt. Die weltweite eindeutige Adresse ist im Abrechnungsmodell des Endnutzers hinterlegt. Der Server für den Masterprozeß der parteispezifischen Abrechnung ist parteispezifisch festgelegt. Die weltweit eindeutige Adresse ist im Abrechnungsmodell der abzurechnenden Partei, nämlich dem Restaurant 24, hinterlegt.

Von jedem Masterprozeß können optional Slave-Prozesse gestartet werden, mit denen einzelne Prozeßschritte gestartet werden. Die Masterprozesse werden unabhängig voneinander gestartet. Eine Kommunikation und eine Synchronisation zwischen den Prozessen, also zwischen den Masterprozessen und zwischen Master- und Slave-Prozessen, findet über Triggereinrichtungen statt.

Aufgabe des Modellierungsprozesses ist es, für jede abzurechnende Partei die Abrechnungsmodelle zu erstellen. Das Abrechnungsmodell wird auf einer Datenbank oder in einem File hinterlegt. Die Adresse des zugehörigen Datenbankservers ist weltweit verfügbar, wobei auf den Datenbankserver mittels dieser Adresse weltweit zugegriffen werden kann.

Das Ergebnis des Modellierungsprozesses sind die zugehörigen Abrechnungsmodelle, wie sie für den Endnutzer in Fig. 4 und für ein konkretes Restaurant abc mit dem Bezugszeichen 30 in Fig. 5 gezeigt werden.

Das Ergebnis des Modellierungsprozesses ist Voraussetzung für den Nutzungsdatensammelprozeß und für die parteispezifischen Abrechnungsprozesse. Der Nutzungsdatensammelprozeß findet dann statt, wenn die bestehenden Verbindungen mit nutzungsspezifischen Abrechnungen beginnen. Das Sammeln von Nutzungsdaten setzt eine gültige Nutzungsdatensatzart voraus. Die gültige Nutzungsdatensatzart kann sich für die bestehenden Verbindungen mehrfach im Laufe der einzelnen Zeitabschnitte ändern.

Das Ergebnis des Nutzungsdatensammelprozesses wird unter der Abrechnungsdatensatzart für den Endnutzer wie folgt dargestellt:

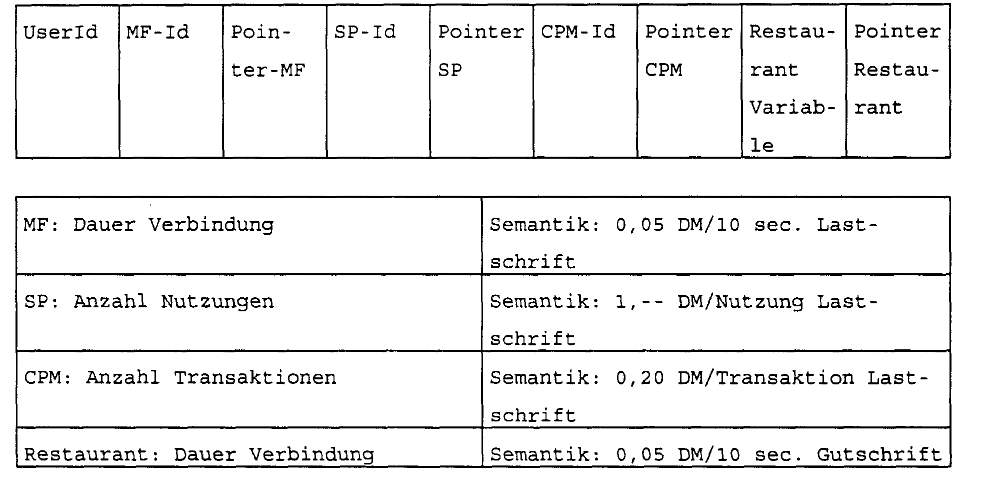

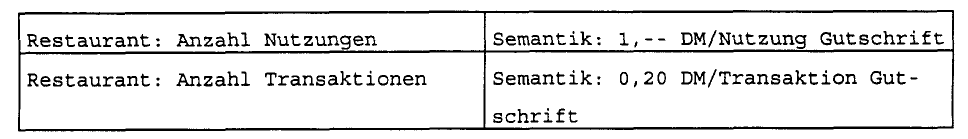

Für die Abrechnungsdatensatzart des Restaurants gilt:

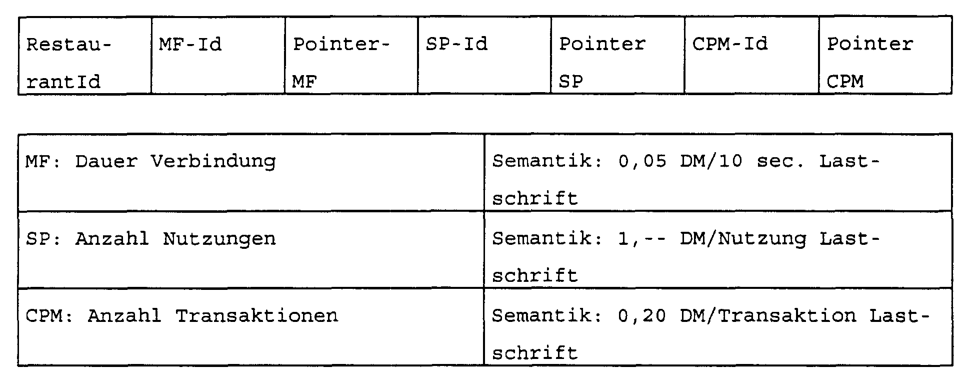

Aus diesen in den Abrechnungsdatensatzarten aufgeführten Abrechnungsparametern wird die optimierte Nutzungsdatensatzart für die bestehenden Verbindungen wie folgt erstellt:

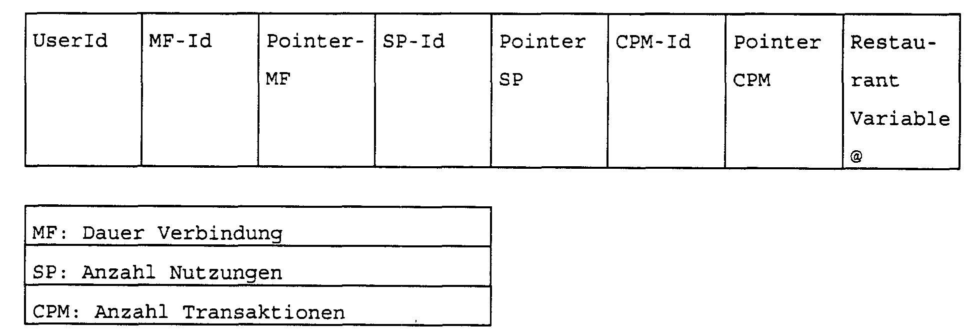

Anschließend wird ein angenommener Nutzungsdatensatz, also unter Berücksichtigung der gemessenen Maßzahl, erstellt:

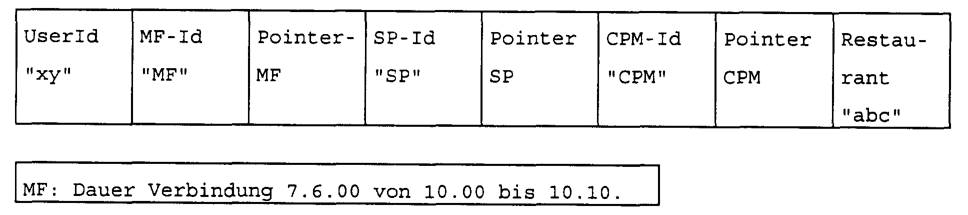

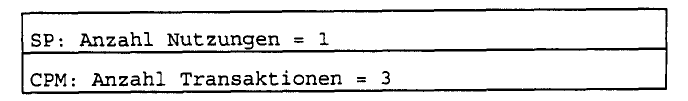

Jeder abgeschlossene Nutzungsdatensatz dient als Input für die parteispezifischen Abrechnungsprozesse. Die Art der Abrechnung (Prepaid, Postpaid per Bank, per Kredit usw.), das Intervall der in der Abrechnung eingehenden Nutzungsdaten wie z. B. die sofortige Abrechnung, die Nutzungsdaten der letzten 30 Tage usw. und der Zeitpunkt der Abrechnung (sofort oder am 30. Tag eines Monats) sind für jede abzurechnende Partei festgelegt. Der Ablauf der parteispezifischen Abrechnungsprozesse besteht hierbei aus drei Schritten:
- Zuerst erfolgt ein Filtern der gesammelten Nutzungsdaten, falls vorhanden, für eine oder mehrere bestehende Verbindungen, an der denen die jeweilige Partei beteiligt ist, auf die parteispezifischen Abrechnungsdatensatzarten. Optional kann für diesen Schritt ein Preprozessor verwendet werden. Das Ergebnis dieses Schrittes ist eine Menge von Paaren, bestehend aus Abrechnungsdatensatzarten und zugehörigen Nutzungsdaten.
- In einem zweiten Schritt wird eine Rechnung erstellt, in dem Zahlungen/Gutschriften zu jeder Abrechnungsdatensatzart zugeordnet werden und eine Gesamtsumme gebildet wird. Für jede Abrechnungsdatensatzart und für jede beteiligte Partei wird anhand der Nutzungsdaten, sofern sie vorhanden sind, zu den einzelnen Abrechnungsparametern und den zugehörigen Tarifinformationen eine Zahlung oder eine Gutschrift ermittelt. Ebenso wird die Gesamtsumme für den gesamten Zeitraum der Abrechnung ermittelt.
- Als letzter Schritt wird das Konto der abzurechnenden Partei gemäß gewählter Abrechnungsart belastet bzw. mit einer Gutschrift versehen.

Das Ergebnis des Abrechnungsprozesses für den Endnutzer ergibt sich somit wie folgt:

| | |
|---|---|
| Verbindung über Netzbetreiber | DM 3,-- (Lastschrift) |
| 1 Nutzung Restaurantfinder Service Provider SP | Dm 1,-- (Lastschrift) |
| 3 Transaktionen Content Provider CPM | DM 0,60 (Lastschrift) |
| Übernahme der Kosten durch Restaurant abc | DM 4,60 (Gutschrift) |
| Gesamtbetrag | DM 0,00 |

Für das Ergebnis des Abrechnungsprozesses für das Restaurant ergibt sich dann:

| | |
|---|---|
| Verbindungsentgeld Netzbetreiber MF: 60 Takte à 10 sec. | DM 3,-- (Lastschrift) |
| 1 Nutzung Restaurantfinder Service Provider SP | DM 1,-- (Lastschrift) |
| 3 Transaktionen Conent Provider CPM | DM 0,60 (Lastschrift) |

In diesem Beispiel wird der Endnutzer nicht belastet, wohingegen das Restaurant die Kosten für die Nutzung des Dienstes eines Restaurantfinders vollständig übernimmt.

Abschließend wird angemerkt, daß die Sicherheit der einzelnen Prozesse durch den jeweiligen Masterprozeß garantiert wird. Hierzu zählen insbesondere die Authentisierung von Slave-Prozessen und Servern, die Zugriffskontrolle auf das Abrechnungsmodell, die Nutzungsdaten und die Abrechnungsdaten, die vertrauliche und integre Übertragung von Informationen, insbesondere von parteispezifischen Daten.

### Bezugszeichenliste

- 1: Telefonnetz
- 2: Endnutzer
- 3: Betreiber
- 4: Händler
- 5: multimediales Kommunikationsnetz
- 6: Netzbetreiber (Networkprovider)
- 7; 20: Endnutzer
- 8: Inhaltsanbieter (Contentprovider)
- 9: Händler/Portalbetreiber (Referrer/Portal-Provider)
- 10: Sponsor (Advertiser)
- 11: Partei 1
- 12: Partei n
- 13, 14: Nutzungsklasse
- 15, 16: Abrechnungsstruktur und Abrechnungssymantik
- 17, 18: Tarif für Abrechnungsparameter
- 21; 31: Mobilfunknetz-Betreiber
- 21a, 24a; 31a: Mobilfunk
- 21b; 31b 21e, 22c, 23c, 23e, 24c, 24f,: Lastschrift für Verbindung
- 25i; 31c, 32c, 33c: Tarif
- 22; 32: Diensteanbieter (Serviceprovider)
- 22a, 24d; 32a: Dienst "Restaurantfinder"
- 22b; 32b: Lastschrift per Nutzung
- 23; 33: Inhaltsanbieter (Contentprovider "CPM")
- 23a, 24g; 33a: Restaurants in München
- 23b; 33b: Lastschrift per Transaktion
- 24: Restaurant mit Variable @
- 24b, 24h: Gutschrift
- 30: Restaurant abc

## Patentansprüche

1. Verfahren zur Abrechnung der Nutzung eines, insbesondere multimedialen, Nachrichtennetzes (5) nach den damit verbundenen Kostenfaktoren für eine zwischen einer Mehrzahl von Betreibern (6, 11, 12, 21 - 24, 31 - 33) und einem Teilnehmer (7, 20), mit jeweils einer Zugangseinrichtung für den Zugang zum Netz, durchgeführte Transaktion,
**dadurch gekennzeichnet, daß**
nach der Transaktion ein an der Transaktion beteiligter Betreiber/Teilnehmer (6, 11, 12, 21 - 24, 31 - 33; 7, 20) und/oder ein weiterer Betreiber/Teilnehmer mit der jeweiligen Zugangseinrichtung eine Abrechnung mit mehreren, insbesondere mit mehr als zwei, Betreibern/Teilnehmern (6, 11, 12, 21 - 24, 31 - 33; 7, 20) mittels eines im Nachrichtennetz erstellten, übertragenen und verarbeiteten Abrechnungsdatensatzes in Echtzeit durchführt.

2. Verfahren nach Anspruch 1,
**dadurch gekennzeichnet, daß**
für die Abrechnung mit mehreren Betreibern/Teilnehmern für jeden Betreiber/Teilnehmer (6, 11, 12, 21 - 24, 31 - 33; 7, 20) jeweils ein spezifisches Abrechnungsmodell in Echtzeit erstellt wird, mittels dessen für jede einzelne Verbindung mit jeweils einem der mehreren Betreiber/Teilnehmer eine Zahlungsrichtung und die für die Nutzung relevanten Abrechnungsparameter festgelegt werden,
in einer Verifizierungsprozedur die Abrechnungsmodelle miteinander abgeglichen werden,
für jeden Betreiber/Teilnehmer (6, 11, 12, 21 - 24, 31 - 33; 7, 20) anschließend der Abrechnungsdatensatz aufgrund seines Abrechnungsmodells erstellt wird, der die verbindungsspezifischen Werte der Abrechnungsparameter beinhaltet, und
für jeden Betreiber/Teilnehmer (6, 11, 12, 21 - 24, 31 - 33; 7, 20) die Zahlungsbeträge an die bzw. von den mehreren Betreibern/Teilnehmern mittels des Abrechnungsdatensatzes ermittelt werden.

3. Verfahren nach Anspruch 1 oder 2, insbesondere nach Anspruch 2,
**dadurch gekennzeichnet, daß**
zu jedem Abrechnungsdatensatz mindestens eine Abrechnungsdatensatzart, bestehend aus einer Abrechnungsstruktur und einer Abrechnungssemantik, erstellt wird, die den Umfang von Abrechnungsdaten bestimmt, welche für die Abrechnung gesammelt werden.

4. Verfahren nach einem der vorangehenden Ansprüche, insbesondere nach Anspruch 3,
**dadurch gekennzeichnet, daß**
die Abrechnungsdaten aus den Abrechnungsparametern, den Werten der Abrechnungsparameter, vorbestimmten Tarifen für die Abrechnungsparameter, der Anzahl der entstandenen Verbindungen mit den mehreren Betreibern/Teilnehmern und Parametern zur Nutzungsart zusammengesetzt werden.

5. Verfahren nach einem der vorangegangenen Ansprüche, insbesondere nach den Ansprüchen 3 oder 4,
**dadurch gekennzeichnet, daß**
die Abrechnungsdatensatzart bei Änderung der Abrechnungsparameter, der Anzahl der Verbindungen, der Parameter zur Benutzungsart oder der vorbestimmten Tarife für die Abrechnungsparameter beendet und ein Abrechnungsdatensatz erstellt wird und anschließend eine neue Abrechnungsdatensatzart begonnen wird.

6. Verfahren nach einem der vorangegangenen Ansprüche, insbesondere nach Anspruch 5,
**dadurch gekennzeichnet, daß**
eine bestimmte Abrechnungsdatensatzart für ein vorgegebenes Zeitintervall gültig ist.

7. Verfahren nach einem der vorangegangenen Ansprüche,
**dadurch gekennzeichnet, daß**
die Abrechnung der Nutzung abhängig von einer vorbestimmten Zeit für jeden relevanten Abrechnungsparameter durchgeführt wird.

8. Verfahren nach einem der vorangegangenen Ansprüche,
**dadurch gekennzeichnet, daß**
die Abrechnungsdatensatzart eine Betreiber/Teilnehmer-Identifikationszeichenfolge beinhaltet.

9. Verfahren nach einem der vorangegangenen Ansprüche,
**dadurch gekennzeichnet, daß**
zur Abrechnung in Abhängigkeit von einem Nutzungsumfang für jede mit den mehreren Betreibern/Teilnehmern entstandene Verbindung mindestens ein Nutzungsdatensatz mit Nutzungsdaten erstellt wird, wobei die Nutzungsdaten sich aus Werten für den jeweiligen Abrechnungsparameter zusammensetzen.

10. Verfahren nach einem der vorangegangenen Ansprüche, insbesondere nach Anspruch 9,
**dadurch gekennzeichnet, daß**
zu jedem Nutzungsdatensatz mindestens eine Nutzungsdatensatzart erstellt wird, die anhand der Abrechnungsdatensatzarten aller Verbindungen mit und zwischen anderen Betreibern/Teilnehmern bestimmt, welche Nutzungsdaten gesammelt werden.

11. Verfahren nach einem der vorangegangenen Ansprüche, insbesondere nach Anspruch 10,
**dadurch gekennzeichnet, daß**
die Nutzungsdatensatzart solange wie die zugeordnete Abrechnungsdatensatzart gültig ist.
